# EUROPEAN PATENT SPECIFICATION

(11) **EP 4 534 619 B1**
(45) Date of publication and mention of the grant of the patent: **25.11.2026**
(21) Application number: 22943249.7
(22) Date of filing: 27.05.2022
(51) Int. Cl.: C09D 179/08, C09D 133/04, C08L 79/08, C09D 7/61, C09D 7/20, H01M 50/40, H01M 50/414, H01M 50/423, H01M 50/426, C08J 9/36, C09D 5/00, C09D 7/40, C09D 127/16, H01M 10/052, H01M 50/417, H01M 50/42, H01M 50/434, H01M 50/443, H01M 50/446, H01M 50/451, H01M 50/403, C08K 5/45, C08K 5/17

(54) **COATING SLURRY, SEPARATOR, SEPARATOR PREPARATION METHOD, AND BATTERY**
BESCHICHTUNGSSUSPENSION, SEPARATOR, SEPARATORHERSTELLUNGSVERFAHREN UND BATTERIE
SUSPENSION DE REVÊTEMENT, SÉPARATEUR, PROCÉDÉ DE PRÉPARATION DE SÉPARATEUR, ET BATTERIE

(43) Date of publication of application: 09.04.2025
(73) Proprietor: Shenzhen Senior Technology Material Co., Ltd., Shenzhen, Guangdong 518106 (CN); Senior Material Holding Company (Europe) AB, 633 62 Eskilstuna (SE)
(72) Inventor: YANG, Dandan, Shenzhen, Guangdong 518106 (CN); PING, Xiang, Shenzhen, Guangdong 518106 (CN); HUANG, Huizhen, Shenzhen, Guangdong 518106 (CN); LIN, Yulin, Shenzhen, Guangdong 518106 (CN)
(74) Representative: Patentanwalt Paul Rosenich
(86) International application number: PCT/CN2022/095778
(87) International publication number: WO 2023/226052

(56) References cited:
- EP-A1- 3 731 307
- WO-A1-2020/034168
- CN-A- 103 066 230
- CN-A- 109 301 134
- CN-A- 111 192 993
- CN-A- 111 525 080
- CN-A- 111 916 628
- CN-A- 113 161 692
- CN-A- 114 008 846
- CN-A- 114 243 207
- CN-B- 107 958 977
- KR-B1- 102 079 187
- US-A1- 2017 133 654
- US-A1- 2021 305 659
- GUOBIN ZHONG, WANG ZHONGHUI; LIANG XIN; XIANG HONGFA: "Effect of binders on performances of ceramic coated separators for lithium-ion batteries ", ENERGY STORAGE SCIENCE AND TECHNOLOGY, CN, vol. 7, no. 6, 19 October 2018 (2018-10-19), CN , pages 1139 - 1145, XP093111231, ISSN: 2095-4239, DOI: 10.12028/j.issn.2095-4239.2018.0113
- WEIYA CHEN ET AL.: "Improved performance of lithium ion battery separator enabled by co-electrospinnig polyimide/poly(vinylidene ﬂuoride-co-hexaﬂuoropropylene) and the incorporation of TiO2-(2-hydroxyethyl methacrylate)", JOURNAL OF POWER SOURCES, vol. 273, 13 October 2014 (2014-10-13), pages 1127 - 1135, XP029092250, ISSN: 0378-7753, DOI: 10.1016/j.jpowsour.2014.10.026
- XINYU ZENG ET AL.: "Tissue paper-based composite separator using nano-SiO2 hybrid crosslinked polymer electrolyte as coating layer for lithium ion battery with superior security and cycle stability", CELLULOSE, vol. 29, 16 March 2022 (2022-03-16), pages 3985 - 4000, XP037805985, ISSN: 0969-0239, DOI: 10.1007/s10570-022-04499-5

## Description

### TECHNICAL FIELD

The present invention relates to the technical field of battery separators, and in particular to a coating slurry for coating a battery separator, a separator coated with the slurry, a preparation method for the separator, and a battery.

### BACKGROUND

Lithium battery separator is one of four core components in a lithium-ion battery, which functions in separating a positive electrode from a negative electrode, allowing lithium ions to pass therethrough, and insulating electrons. The performance of the separator directly affects the performance of lithium-ion battery and is one of the key factors that influence the development of lithium-ion batteries. Lithium-ion battery separators used in the fields of HEV (Hybrid Electric Vehicle), EV (Electric Vehicle), and energy storage need to satisfy performance requirements such as high heat resistance, low impedance, high adhesion, etc.

KR 102079187 B1 provides a coating composition comprising a ceramic particle whose surface is modified by a vinyl siloxane-based surface modifier, a fluorine-based polymer, a slurry containing a crosslinkable polymer, and a solvent in which the slurry is dispersed, and cured by a rolling drying method.

### SUMMARY

The present invention provides a coating slurry, a separator, a preparation method and a battery, so as to improve the heat resistance and a breakage temperature of an organic-solvent coated battery separator. The present invention is as defined in the appended claim set.

According to a first aspect of the present invention, there is provided a coating slurry, main components of which include a solvent, an ultra-high heat-resistant polymer resin binder, an auxiliary binder, a cross-linking agent, and an inorganic filler.

In some embodiments, a melting point of the ultra-high heat-resistant polymer resin binder is above 200°C, an addition amount of the ultra-high heat-resistant polymer resin binder is 1-60wt%, and the ultra-high heat-resistant polymer resin binder is selected from one or two of polyimide, ether anhydride polyimide, fluoroanhydride polyimide, ketone anhydride polyimide, bismaleimide oligomer, and alkenyl-terminated polyimide oligomer.

In some embodiments, an addition amount of the auxiliary binder is 1-20wt%, and the auxiliary binder is selected from one or more of acrylate polymer, polyacrylic acid, polyurethane acrylate, polysiloxane methacrylate, polyvinylidene fluoride (PVDF) homopolymer, vinylidene fluoride-hexafluoropropylene copolymer, and polyvinylidene fluoride-tetrafluoroethylene-propylene terpolymer.

In some embodiments, an addition amount of the cross-linking agent is 0.001-6wt%, and the cross-linking agent is selected from one or more of diethylenetriamine, ethylenediamine, 3,3'-dichloro-4,4'-diaminodiphenylmethane, m-phenylenediamine, diaminodiphenylmethane, isopropyl thioxanthone (ITX), benzophenone, and ethyl p-dimethylaminobenzoate.

In some embodiments, an addition amount of the inorganic filler is 1-70wt%, and a particle diameter of the inorganic filler is 0.3-0.8 µm.

In some embodiments, the inorganic filler is selected from one or more of Al₂O₃, SiO₂, TiO₂, ZrO₂, MgO, CaO, AlOOH, and SiC.

In some embodiments, the coating slurry is an organic-solvent coating slurry, and a solid content thereof is 7-20wt%.

In some embodiments, the solvent is N-methylpyrrolidone (NMP).

According to a second aspect of the present invention, there is provided a separator, including the aforementioned coating slurry and a substrate, where the coating slurry is coated on at least one surface of the substrate and subjected to ultraviolet light radiation treatment with set energy and set wavelength to obtain an ultraviolet cross-linked separator.

In some embodiments, a wavelength of ultraviolet light used is in a range of 210nm-420nm, an ultraviolet cross-linking time is 0.001s-10s, and a radiation light intensity is above 50mj/cm².

In some embodiments, a thickness of the substrate is 5-20 µm.

In some embodiments, the substrate is any one of polyolefin microporous separator, polyimide microporous separator, nonwoven separator, multilayer composite separator, ceramic coated separator, polymer coated separator.

According to a third aspect of the present invention, there is provided a separator, including the aforementioned coating slurry and a substrate, where the coating slurry is coated on at least one surface of the substrate, the separator has a breakage temperature of greater than 180°C, and a breakdown voltage of greater than 2.1KV, and a breakdown voltage per unit thickness is greater than 5.1KV/mil.

In some embodiments, a breakage temperature of the separator in a machine direction (MD direction) is greater than 210°C, and a breakage temperature of the separator in a transverse direction (TD direction) is greater than 190°C.

According to a fourth aspect of the present invention, there is provided a preparation method for the aforementioned separator, including the following steps:
(S1) preparing a slurry: adding no more than 60wt% of ultra-high heat-resistant polymer resin binder and 1-20wt% of auxiliary binder into a solvent; after being fully dissolved, adding 1-70wt% of inorganic filler and dispersing them evenly to obtain a premixed slurry; adding a cross-linking agent into a solvent and completely dissolving it to obtain a cross-linking agent solution; and adding the cross-linking agent solution into the premixed slurry, wherein an amount of the cross-linking agent is 0.001-6wt% of an solid content of the premixed slurry , so as to obtain a slurry;
(S2) coating: coating the slurry prepared above on at least one surface of the substrate;
(S3) phase transformation: immersing the separator obtained after coating in a coagulation tank containing a mixed solution of a first solvent and a non-solvent to perform phase transformation;
(S4) drying: washing and drying the product obtained in the above step (3), to obtain a composite separator; and
(S5) ultraviolet cross-linking: subjecting the composite separator to an ultraviolet light radiation for inducing a cross-linking reaction, to obtain an ultraviolet cross-linked composite separator.

In some embodiments, a wavelength of the ultraviolet light used is in a range of 210nm-420nm, an ultraviolet cross-linking time is 0.001s-10s, and a radiation light intensity is above 50mj/cm².

In some embodiments, a ratio of the first solvent is 20-30wt% based on a total mass of the first solvent and the non-solvent.

In some embodiments, the step (S1) further includes adding an ultra-high heat-resistant polymer resin binder and an auxiliary binder to NMP solvent, and stirring continuously for 12h-24h at a temperature of 50-70°C to obtain a premixed slurry.

According to a fourth aspect of the present invention, there is provided a battery, including a separator, a positive electrode, a negative electrode and an electrolyte, where the separator is the aforementioned separator.

Compared with the prior art, the present invention has at least the following technical effects:
the heat resistance and breakage temperature of the separator are successfully improved at a lower cost using a simple formula and process, which greatly improves the safety of the battery.

### BRIEF DESCRIPTION OF DRAWINGS

The present invention is further described below with reference to the accompanying drawings and specific embodiments.

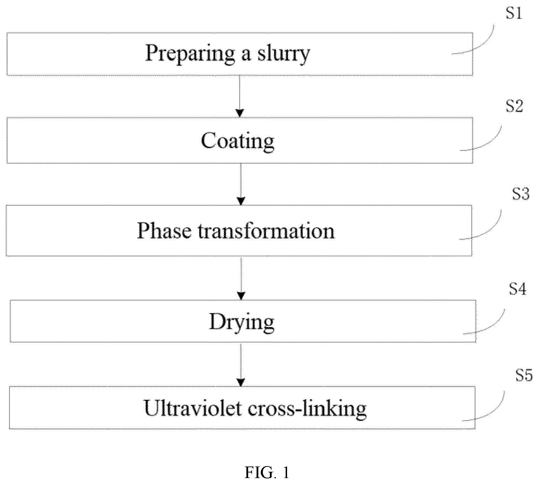

FIG. 1 is a schematic flow chart of a preparation method for a separator provided by an embodiment of the present invention.

### DESCRIPTION OF EMBODIMENTS

The technical solutions in embodiments of the present invention will be described clearly and completely below. Obviously, the described embodiments are only some of the embodiments of the present invention, rather than all of the embodiments. Based on the embodiments of the present invention, all other embodiments obtained by those skilled in the art without making any creative work shall fall within the protection scope of the present invention.

Before proposing the present application, the applicant conducted a series of research and experiments on the existing separators.

Where, in order to ensure heat resistance, one way is to use the ceramic coating separator plus non-solvent induced phase separation (CCS + NIPS) layered coating preparation process. That is, a ceramic layer is first coated on both sides or one side of a polypropylene (PP), PE or PP/PE/PP base film to ensure the heat resistance, and then, an adhesive resin is coated on the ceramic layer to meet the adhesion performance. However, the layered coating process is relatively complicated, which is not conducive to cost control and production management.

Another way is to use organic-solvent mixed coating process, that is, a high heat-resistant resin binder (such as polyetherimide) and a photoinitiator are coated on a base film, and then a UV cross-linking is performed. However, the heat resistance of a conventional organic-solvent mixed coating process is not as good as that of the layered coating process. The applicant has found through experimental verification and analysis that the reason why the organic-solvent mixed coating process has poor heat resistance is that the high heat-resistant resin binder itself has a very stable main chain, and thus has poor cross-linking effect.

In order to solve the problem of poor heat resistance of the organic-solvent mixed coating process, the applicant conducted a series of theoretical researches and experimental verifications. For example, the applicant tried to replace the conventional high heat-resistant resin binder with an ultra-high heat-resistant resin binder (such as polyetherimide), but the improvement in heat resistance is not obvious.

As a further research method, the applicant added a ceramic filler while replacing the conventional high heat-resistant resin binder with the ultra-high heat-resistant resin binder (such as polyetherimide) in order to further improve the heat resistance. However, it was found that it is difficult to complete the above steps using the existing organic-solvent coating process in actual process. After a series of analyses and experiments, it was found that the reason is that the polyetherimide has poor adhesion when it is dissolved and then coated on the base film, while immersion in a coagulation tank is required in the organic-solvent coating process, and during the immersion, the polyetherimide would fall off, thus affecting the performance of the final product.

Therefore, the technical solution of the present application is obtained after studying the above-mentioned problems of the organic-solvent mixed coating process and conducting a series of researches and experiments, aiming to solve the problems of how to improve the heat resistance of the separator produced by the organic-solvent mixed coating process and how to prevent the coated slurry from falling off during the immersion in the coagulation tank.

The technical solution of the present invention is described in detail below with reference to specific embodiments. The following specific embodiments may be combined with each other, and the same or similar concepts or processes may not be described in detail in some embodiments.

An embodiment of the present invention first provides a coating slurry, main components of which include a solvent, an ultra-high heat-resistant polymer resin binder, an auxiliary binder, a cross-linking agent and an inorganic filler.

A melting point of the ultra-high heat-resistant polymer resin binder can be above 200°C, an addition amount of the ultra-high heat-resistant polymer resin binder can be 1-60wt%, and the ultra-high heat-resistant polymer resin binder can be selected from one or two of polyimide, ether anhydride polyimide, fluoroanhydride polyimide, ketone anhydride polyimide, bismaleimide oligomer, and alkenyl-terminated polyimide oligomer. Preferably, the addition amount of the ultra-high heat-resistant polymer resin binder may be 15-60wt%.

For example, the addition amount of the ultra-high heat-resistant polymer resin binder can be any one of 1wt%, 5wt%, 8wt%, 15wt%, 20wt%, 25wt%, 28wt%, 30wt%, 33wt%, 38wt%, 43wt%, 47wt%, 50wt%, 56wt%, 58wt%, 60wt%, or a range between any two of them.

Binder is one of the important materials that must be used in formation of the coating layer. The selection and use of the binder significantly affect the adhesion, heat resistance and electrochemical properties of lithium-ion battery separators. For a long time, polyvinylidene fluoride (PVDF) has been an important binder used in the battery industry and is also the most commonly used binder for lithium-ion batteries. However, with the increasing urgency of clean production and the rapid increase of requirements for battery performance in high-performance power applications, the problems and shortcomings of using polyvinylidene fluoride (PVDF) binder are becoming increasingly significant. High-performance binder is becoming an important research direction in key materials for lithium-ion battery.

The ultra-high heat-resistant polymer resin binder of the present application is different from conventional polymer resin binders (melting point of generally 130-160°C). The ultra-high heat-resistant polymer resin binder of the present application not only has super strong adhesion, but also has ultra-high heat resistance and good electrochemical properties. To comprehensively meet these performance requirements, the present application selects one or two of polyimide, ether anhydride polyimide, fluoroanhydride polyimide, ketone anhydride polyimide, bismaleimide oligomer, and alkenyl-terminated polyimide oligomer.

In order to prevent the problem of falling off of the ultra-high heat-resistant polymer resin binder such as polyimide during immersion in the coagulation tank due to poor adhesion when applied to the base film, an auxiliary binder is added to the coating slurry of the present application. Where, an addition amount of the auxiliary binder may be 1-20wt%, and the auxiliary binder is selected from one or more of acrylate polymer, polyacrylic acid, polyurethane acrylate, polysiloxane methacrylate, PVDF homopolymer, vinylidene fluoride-hexafluoropropylene copolymer, and polyvinylidene fluoride-tetrafluoroethylene-propylene terpolymer. The auxiliary binders selected in the present application enable the coating layer to have high heat resistance, high adhesion, suitable swelling property, and active groups that are prone to ultraviolet cross-linking and grafting and are more stable in preparation of slurry system. Moreover, since these auxiliary binders of the present application contain unsaturated double bonds, they may provide the unsaturated double bonds to be effectively coordinated with the above-mentioned ultra-high heat-resistant polymer resin binder of the present application, and under the excitation of ultraviolet light, they can generate UV light-curing cross-linking active groups, so as to effectively carry out grafting and cross-linking.

Preferably, the addition amount of the auxiliary binder may be 7-19 wt%.

For example, the addition amount of the auxiliary binder can be any one of 1wt%, 5wt%, 7wt%, 8wt%, 10wt%, 15wt%, 17wt%, 18wt%, and 20wt% or a range between any two of them.

An addition amount of the cross-linking agent can be 0.001-6wt%, and the cross-linking agent is selected from one or more of diethylenetriamine, ethylenediamine, 3,3'-dichloro-4,4'-diaminodiphenylmethane, m-phenylenediamine, diaminodiphenylmethane, ITX, benzophenone, and ethyl p-dimethylaminobenzoate. The addition amount of the cross-linking agent is closely related to the performance of the separator. If the addition amount of the cross-linking agent is too low, the degree of cross-linking and curing will be insufficient and the improvement in breakage temperature of the separator may not be as expected. If the addition amount of the cross-linking agent is too much, it will be remained too much in the separator and leads to an increased cost. Preferably, an addition amount of the cross-linking agent is 0.01-5wt%.

For example, the addition amount of the cross-linking agent is any one of 0.01wt%, 0.05wt%, 0.07wt%, 0.1wt%, 0.5wt%, 0.9wt%, 1wt%, 1.3wt%, 1.7wt%, 1.9wt%, 2.1wt%, 2.5wt%, 2.9wt%, 3.1wt%, 3.5wt%, 3.9wt%, 4.1wt%, 4.5wt%, 4.9wt%, 5.1wt%, 5.5wt%, 5.9wt%, and 6wt% or a range between any two of them.

Where, an addition amount of the inorganic filler may be 1-70wt%; and a particle diameter of the inorganic filler is 0.3-0.8µm. In some specific embodiments, the inorganic filler may be ceramic particle. It can be understood that the particle diameter of the filler as mentioned in the present application refers to a diameter of a secondary particle of the inorganic filler.

In some embodiments, the inorganic filler is selected from one or more of Al₂O₃, SiO₂, TiO₂, ZrO₂, MgO, CaO, AlOOH, and SiC.

Preferably, the addition amount of the inorganic filler is 10-70wt%. For example, the addition amount of the inorganic filler is any one of 10wt%, 15wt%, 20wt%, 25wt%, 30wt%, 32wt%, 35wt%, 40wt%, 45wt%, 50wt%, 55wt%, 57wt%, 60wt%, 65wt%, and 70wt% or a range between any two of them.

In the present application, the inorganic filler is added and evenly dispersed in the coating layer, thereby better ensuring uniform transfer of heat.

In some embodiments, a solid content of the organic-solvent coating slurry is 7-20wt%. For example, the solid content of the organic-solvent coating slurry can be any one of 7wt%, 8wt%, 9wt%, 10wt%, 11wt%, 12wt%, 13wt%, 14wt%, 15wt%, 16wt%, 17wt%, 18wt%, 19wt%, and 20wt%, or a range between any two of them.

In some embodiments, the solvent is NMP.

The present invention further provides a separator, including the aforementioned coating slurry and a substrate, where the coating slurry is coated on at least one surface of the substrate (one or both surfaces) and subjected to ultraviolet light radiation treatment with set energy and set wavelength to obtain an ultraviolet cross-linked separator.

The substrate is including but not limited to polyolefin microporous separators (polyethylene, polypropylene, polybutylene, etc.), polyimide microporous separators, non-woven fabric separators, multilayer composite separators, ceramic coated separators, polymer coated separators, etc. A thickness of the substrate is 5-20 µm.

When the separator of the present invention is subjected to ultraviolet light radiation treatment, the cross-linking agent in the slurry can transition from a ground state to an excited state under ultraviolet light radiation of set wavelength and energy, and capture H ions from the C-H structure of the organic matter in the system, and at the same time generate organic macromolecular free radicals, and when they terminate each other, the organic macromolecules are cross-linked, so that molecular chain grafting and polymerization occur between the surface active groups of the inorganic filler and the ultra-high heat-resistant polymer resin binder as well as between the molecules of the ultra-high heat-resistant polymer resin binder itself, and then a uniform macromolecular network structure is formed. Since a uniform distribution of the inorganic filler greatly ensures a uniform and rapid transfer of heat as well as the cross-linked network structure of the ultra-high heat-resistant polymer resin binder, the overall heat resistance of the separator is greatly improved, and a thermal shrinkage rate at 150°C for 30min is less than 10%. In addition, the separator obtained in the present application also has an improved breakage temperature. The breakage temperature of conventional products is about 150°C, while the breakage temperature of the product of the present invention is above 180°C, which further improves the safety performance of the product.

Please refer to FIG. 1. As shown in FIG. 1, the present invention further provides a preparation method the aforementioned separator, including the following steps:
S1: preparing a slurry: adding no more than 60wt% of ultra-high heat-resistant polymer resin binder and 1-20wt% of auxiliary binder into a solvent; after being fully dissolved, adding 1-60wt% of inorganic filler and dispersing evenly to obtain a premixed slurry; adding a cross-linking agent into a solvent and completely dissolving it to obtain a cross-linking agent solution; and adding the cross-linking agent solution into the premixed slurry, wherein an amount of the cross-linking agent is 0.001-6wt% of an solid content of the premixed slurry is cross-linked, so as to obtain a slurry;
S2: coating: coating the slurry prepared above on at least one surface of a substrate;
S3: phase transformation: immersing the separator obtained after coating in a coagulation tank containing a mixed solution of a first solvent and a non-solvent to perform phase transformation;
S4: drying: washing and drying the product obtained in the above step S3, to obtain a composite separator; and
S5: ultraviolet cross-linking: subjecting the composite separator to an ultraviolet light radiation for inducing a cross-linking reaction, to obtain an ultraviolet cross-linked composite separator.

In some preferred embodiments, a wavelength of the ultraviolet light used is in a range of 210nm-420nm, an ultraviolet cross-linking time is 0.001s-10s, and a radiation light intensity is above 50mj/cm².

In some preferred embodiments, a ratio of the first solvent is 20-30wt% based on a total mass of the first solvent and the non-solvent.

The present invention further provides a separator, including the aforementioned coating slurry and a substrate, where the coating slurry is coated on at least one surface of the substrate, the separator has a breakage temperature of greater than 190°C, and a breakdown voltage of greater than 2.1KV, and a breakdown voltage per unit thickness thereof is greater than 5. 1KV/mil.

In some embodiments, the breakage temperature of the separator in a MD direction is greater than 210°C, and breakage temperature of the separator in a TD direction is greater than 190°C.

The performance of the separator provided by the present invention can be specifically seen in Table 1.

The present invention further provides a battery, including a separator, a positive electrode, a negative electrode and an electrolyte, where the separator is the above-mentioned separator.

The product performance of some examples of the present invention will be analyzed through experiments below.

### Example 1

S1: preparing a slurry: adding an ultra-high heat-resistant polymer resin binder and an auxiliary binder to NMP solvent, and stirring continuously for 12h-24h at a temperature of 50-70°C to obtain a premixed slurry A; after polymers in the premixed slurry A are completely dissolved, adding an inorganic filler (particle diameter D50 = 0.3-0.8µm) to the premixed slurry A, stirring thoroughly for 120min at 30-50°C at a stirring speed of 1800rpm/min, and mixing and dispersing uniformly to obtain a premixed slurry B; in addition, adding a cross-linking agent to NMP solvent and completely dissolving to obtain a cross-linking agent solution with a concentration of 20%; adding the cross-linking agent solution to the premixed slurry B in an amount of 3wt% to obtain a slurry, a total solid content of the slurry being 12%;

S2: coating: coating the slurry prepared above on at least one surface of a substrate, specifically, preparing a PE wet-process separator as the substrate; using a micro-concave roller to coat the slurry prepared above on two opposite surfaces of the substrate at a coating speed of 60 m/min;

S3: phase transformation: immersing the separator obtained after coating in a coagulation tank containing a mixed solution of a first solvent and a non-solvent at a temperature of 25°C to perform phase transformation, where, the first solvent accounts for 25wt% of a total mass of the first solvent and the non-solvent;

S4: drying: washing and drying the product obtained in the above step S3, to obtain a composite separator;

S5: ultraviolet cross-linking: subjecting the composite separator to an ultraviolet light radiation for inducing a cross-linking reaction, to obtain an ultraviolet cross-linked composite separator, where a wavelength of the ultraviolet light used is in a range of 250nm-390nm, an ultraviolet cross-linking time is 0.6s, and a radiation light intensity is at least 50mj/cm²; where a speed of an entire production line is 30m/min.

Where, the wavelength of the ultraviolet light fluctuates within a certain range. Therefore, in other examples, the ultraviolet light can be a value in a range of such as 210-310nm, 250-390nm, 280-420nm, etc. When a wavelength range is determined, the ultraviolet cross-linking time and the radiation light intensity have a great impact on the cross-linking effect. Since the formula contains inorganic particles that have a certain shielding effect on ultraviolet light, the cross-linking effect is poor when an ultraviolet light intensity is lower than 50mj/cm².

In the present example, the ultra-high heat-resistant polymer resin binder used is polyetherimide, the auxiliary binder is polyurethane acrylate, the inorganic filler is an alumina ceramic powder, and the cross-linking agent is ITX, where a mass ratio of the ultra-high heat-resistant polymer resin binder: the auxiliary binder: the inorganic filler is 60:8:32. A thickness of the substrate is 10.4 µm.

### Example 2

The difference between Example 2 and Example 1 is that the mass ratio of the ultra-high heat-resistant polymer resin binder: the auxiliary binder: the inorganic filler is 25:8:57. The thickness of the substrate is 11.9 µm. Other aspects of Example 2 are the same as Example 1, and will not be repeated here.

### Example 3

The difference between Example 3 and Example 1 is that the auxiliary binder used is polyvinylidene fluoride-hexafluoropropylene copolymer ( P(VDF-HFP) ) and the cross-linking agent is diethylenetriamine; where the mass ratio of the ultra-high heat-resistant polymer resin binder: the auxiliary binder: the inorganic filler is 25:10:65. The thickness of the substrate is 11.7 µm. Other aspects of Example 3 are the same as Example 1, and will not be repeated here.

### Example 4

The difference between Example 4 and Example 1 is that the auxiliary binder used is P(VDF-HFP) and the cross-linking agent is diethylenetriamine, where the mass ratio of the ultra-high heat-resistant polymer resin binder: the auxiliary binder: the inorganic filler is 25:18:57. The thickness of the substrate is 11.8 µm. Other aspects of Example 4 are the same as Example 1, and will not be repeated here.

### Example 5

The difference between Example 5 and Example 1 is that the auxiliary binder used is P(VDF-HFP) and the cross-linking agent is diethylenetriamine, where the mass ratio of the ultra-high heat-resistant polymer resin binder: the auxiliary binder: the inorganic filler is 60:8:32. The thickness of the substrate is 11.6 µm. Other aspects of Example 5 are the same as Example 1, and will not be repeated here.

### Example 6

The difference between Example 6 and Example 1 is that the cross-linking agent is ITX +diethylenetriamine, where the mass ratio of the ultra-high heat-resistant polymer resin binder: the auxiliary binder: the inorganic filler is 25:8:57. The thickness of the substrate is 11.7 µm. Other aspects of Example 6 are the same as Example 1, and will not be repeated here.

### Example 7

The difference between Example 7 and Example 1 is that the ultra-high heat-resistant polymer resin binder used is polyetherimide + bismaleimide, the auxiliary binder used is P(VDF-HFP), and the cross-linking agent is ITX + diethylenetriamine, where the mass ratio of the ultra-high heat-resistant polymer resin binder: the auxiliary binder: the inorganic filler is 10:20:70. The thickness of the substrate is 12 µm. Other aspects of Example 7 are the same as Example 1, and will not be repeated here.

### Example 8

The difference between Example 8 and Example 1 is that the ultra-high heat-resistant polymer resin binder used is polyetherimide + bismaleimide; the auxiliary binder used is P(VDF-HFP), and the cross-linking agent is ITX + diethylenetriamine; where the mass ratio of the ultra-high heat-resistant polymer resin binder: the auxiliary binder: the inorganic filler is 55:15:30. The thickness of the substrate is 12 µm. Other aspects of Example 8 are the same as Example 1, and will not be repeated here.

### Comparative Example 1

The difference between Comparative Example 1 and Example 1 is that P(VDF-HFP) is used instead of the ultra-high heat-resistant polymer resin binder of Example 1, where the mass ratio of P(VDF-HFP): the auxiliary binder: the inorganic filler is 60:8:32. The thickness of the substrate is 10.6 µm. Other aspects of Comparative Example 1 are the same as Example 1, and will not be repeated here.

### Comparative Example 2

The difference between Comparative Example 2 and Example 1 is that no auxiliary binder is added, where the mass ratio of the ultra-high heat-resistant polymer resin binder: the auxiliary binder: the inorganic filler is 60:/:40. The thickness of the substrate is 12 µm. Other aspects of Comparative Example 2 are the same as Example 1, and will not be repeated here.

Please refer to Table 1, which shows the properties of the corresponding separators obtained in the above Examples 1-6 and Comparative Examples 1-2.

Where, the thermal shrinkage test under 150°C for 30min is carried out as follows: first, cutting a separator into a test sample with a size of 50mm*50mm along horizontal and vertical directions of the separator, and performing initial marking on the separator; second, sandwiching the cut sample between A4 papers, where 5 A4 papers are stacked below the cut sample and 5 A4 papers are stacked above the cut sample; then, setting a temperature of an oven to be 150°C, and rising the temperature to the set temperature, and fully preheating the oven to ensure that an internal temperature thereof stably maintains the set temperature; then quickly putting the prepared sample sandwiched between the A4 papers together with the A4 papers into the oven (the sample should be placed in the middle of an upper layer of the oven, and cannot be placed on the lower layer) and closing the oven door immediately; after closing the oven door, setting a testing time as 30 minutes according to the test requirement; after the time is up, taking out the sample separator from the oven, gently flattening the separator after it cools down to a room temperature, measuring a distance between the horizontal/vertical separator edges, recording the data and calculating the thermal shrinkage rate based on a thermal shrinkage rate calculation formula as below: thermal shrinkage rate (%) = (length between initial marks - length between marks after heating) / length between initial marks × 100%.

The breakage temperature of the separator is obtained through thermomechanical analysis (TMA) test. Testing the breakage temperature using TMA refers to tensioning the separator with a force (simulating a state inside the battery) and then gradually raising the temperature until the separator is ruptured.

The electrode sheet adhesion performance refers to a tested adhesion force of two opposite sides of the separator to the electrode sheets. The test method of the electrode sheet adhesion performance is carried out as follows: making a coated separator sample to be tested into a standard sample strip (coated separator (25mm*180mm), electrode sheet (20mm*150mm)), using a hot pressing shaping machine to allow the coated surface of the separator and the electrode sheet to be bonded under a certain pressure and a temperature of 60°C, then clamping the other ends of the electrode sheet and of the sample by a clamp, and applying a tension until a displacement of a tensile machine is finished. Parameters of the tensile machine are set as follows: a fixed displacement: 150mm and a testing speed: 300mm/min.

The test method for breakdown voltage is carried out as follows: using TH9320 breakdown voltage tester to perform a breakdown voltage test, with set parameters: output voltage 6KV, output current 1mA, rising time 30s; gently placing a copper conductor on a separator sample, clicking START button, so that the instrument starts to test and automatically records the data.

The calculation method of the breakdown voltage per unit thickness is as follows: breakdown voltage per unit thickness = breakdown voltage (KV)*25.4/separator thickness (µm) (where 1 mil=25.4 µm).

**Table 1**

| Item | Thermal shrinkage rate under 150°C for 30min | | Breakage temperature measured by TMA (°C) | | Electrode sheet adhesion performance (gf/25mm) | | Breakdown voltage (KV) | Breakdown voltage per unit thickness (KV/mil) |
|---|---|---|---|---|---|---|---|---|
| | MD | TD | MD | TD | A surface | B surface | | |
| Example 1 | 8 | 6 | 228.29 | 180.0 7 | 49 | 43 | 3.3 | 8.1 |
| Example 2 | 8 | 6.2 | 220 | 198.4 | 40 | 32 | 2.6 | 5.5 |
| Example 3 | 9 | 8.1 | 243 | 200.05 | 48 | 43 | 2.5 | 5.4 |
| Example 4 | 7.5 | 6.5 | 210.3 | 210 | 50 | 48 | 2.6 | 5.6 |
| Example 5 | 8.8 | 7.2 | 230 | 213.4 | 48 | 42 | 3.5 | 7.7 |
| Example 6 | 7.6 | 6 | 253 | 234 | 42 | 35 | 2.8 | 6.1 |
| Example 7 | 9.5 | 8 | 236 | 213 | 70 | 65 | 2.1 | 4.4 |
| Example 8 | 8.2 | 7 | 225 | 220 | 75 | 66 | 3.8 | 8.0 |
| Comparative Example 1 | 36 | 17.9 | 176 | 165.8 | 40 | 35 | 1.5 | 3.6 |
| Comparative Example 2 | 37 | 32 | 157.61 | 155.62 | 33 | 28 | 1.9 | 4.2 |

It can be seen from Table 1 that the present application greatly improves the overall heat resistance of the separator. The thermal shrinkage rates under 150°C for 30min in Examples 1 to 8 are less than 10%, while the thermal shrinkage rates under 150°C for 30min in Comparative Examples 1 and 2 are much larger than 10%. In addition, the high heat resistance and high adhesion lithium-ion battery separator obtained by organic-solvent mixed coating process in the present application also has an excellent breakage temperature. The breakage temperatures in Examples 1 to 8 are all above 180°C, further improving the safety performance of the product, while the breakage temperatures in Comparative Examples 1 and 2 are both lower than 180°C.

Where, ITX mainly functions in stimulating active groups of polyurethane acrylate substances to further induce grafting and cross-linking, and diamines mainly functions in stimulating active groups of polyetherimide to further induce bond breaking, grafting and cross-linking. When both of them are present at the same time, the cross-linking effect is enhanced (e.g., Example 6). Since the thickness of the separators are variable, the breakdown voltage per mil unit thickness is used here to characterize the improvement of the withstanding breakdown voltage performance (1 mil = 25.4 µm).

In the description of this specification, the descriptions with reference to terms "an implementation", "an embodiment", "a specific implementation process", "an example", etc., mean that the specific features, structures, materials or characteristics described with reference to the embodiment or example are included in at least one embodiment or example of the present invention. In this specification, the exemplary expressions of the above terms do not necessarily refer to the same embodiment or example. Furthermore, the specific features, structures, materials, or characteristics described may be combined in any suitable manner in any one or more embodiments or examples.

Finally, it should be noted that the above examples are only used to illustrate the technical solutions of the present invention, rather than to limit them. Although the present invention has been described in detail with reference to the aforementioned examples, those skilled in the art should understand that they can still modify the technical solutions described in the aforementioned examples, or replace some or all of the technical features therein equivalently. However, these modifications or replacements do not make the essence of the corresponding technical solutions deviate from the scope of the technical solutions of the examples of the present invention.

## Claims

1. A coating slurry, wherein main components of the coating slurry comprise a solvent, an ultra-high heat-resistant polymer resin binder, an auxiliary binder, an ultraviolet activated cross-linking agent and an inorganic filler, wherein
a melting point of the ultra-high heat-resistant polymer resin binder is 200°C or more, **characterised in that**
based on a total mass of the ultra-high heat-resistant polymer resin binder, the auxiliary binder, and the inorganic filler, an addition amount of the ultra-high heat-resistant polymer resin binder is 10-60wt%, and the ultra-high heat-resistant polymer resin binder is selected from one or two of polyimide, ether anhydride polyimide, fluoroanhydride polyimide, ketone anhydride polyimide, bismaleimide oligomer, and alkenyl-terminated polyimide oligomer; and
based on a total mass of the ultra-high heat-resistant polymer resin binder, the auxiliary binder, and the inorganic filler, an addition amount of the auxiliary binder is 8-20wt%, and the auxiliary binder is selected from one or more of acrylate polymer, polyacrylic acid, polyurethane acrylate, polysiloxane methacrylate, polyvinylidene fluoride homopolymer, vinylidene fluoride-hexafluoropropylene copolymer, and polyvinylidene fluoride-tetrafluoroethylene-propylene terpolymer.

2. The coating slurry according to claim 1, wherein an addition amount of the ultraviolet activated cross-linking agent is 0.001-6wt%, and the ultraviolet activated cross-linking agent is selected from one or more of diethylenetriamine, ethylenediamine, 3,3'-dichloro-4,4'-diaminodiphenylmethane, m-phenylenediamine, diaminodiphenylmethane, isopropyl thioxanthone, benzophenone, and ethyl p-dimethylaminobenzoate.

3. The coating slurry according to claim 1, wherein an addition amount of the inorganic filler is 1-70wt%, and a particle diameter of the inorganic filler is 0.3-0.8 µm.

4. The coating slurry according to claim 3, wherein the inorganic filler is selected from one or more of Al₂O₃, SiO₂, TiO₂, ZrO₂, MgO, CaO, AlOOH, and SiC.

5. The coating slurry according to claim 1, wherein the coating slurry is an organic-solvent coating slurry, and a solid content thereof is 7-20wt%.

6. The coating slurry according to claim 1, wherein the solvent is N-methylpyrrolidone.

7. A separator, **characterized by** comprising the coating slurry according to any one of claims 1-6 and a substrate, wherein the coating slurry is coated on at least one surface of the substrate and subjected to ultraviolet light radiation with set energy and set wavelength, to obtain an ultraviolet cross-linked separator.

8. The separator according to claim 7, wherein a thickness of the substrate is 5-20 µm and the substrate is any one of polyolefin microporous separator, polyimide microporous separator, nonwoven separator, multilayer composite separator, ceramic coated separator, polymer coated separator.

9. The separator according to claim 7, wherein the separator has a breakage temperature of greater than 180°C and a breakdown voltage of greater than 2.1KV, and the breakdown voltage per unit thickness is greater than 5.1KV/mil.

10. The separator according to claim 9, wherein the breakage temperature of the separator is greater than 210°C in a machine direction, and the breakage temperature of the separator is greater than 190°C in a transverse direction.

11. A preparation method for the separator according to any one of claims 7-10, **characterized by** comprising the following steps:
preparing a slurry (S1): adding ultra-high heat-resistant polymer resin binder and of auxiliary binder into a solvent; after being fully dissolved, adding inorganic filler and dispersing them evenly to obtain a premixed slurry; adding an ultraviolet activated cross-linking agent into a solvent and completely dissolving it to obtain an ultraviolet activated cross-linking agent solution; and adding the ultraviolet activated cross-linking agent solution into the premixed slurry in such an amount that 0.001-6wt% of the ultraviolet activated cross-linking agent is cross-linked, to obtain a slurry;
coating (S2): coating the slurry prepared above on at least one surface of a substrate;
phase transformation (S3): immersing the separator obtained after coating in a coagulation tank containing a mixed solution of a first solvent and a non-solvent to perform phase transformation;
drying (S4): washing and drying a product obtained in the above step (S3), to obtain a composite separator;
ultraviolet cross-linking (S5): subjecting the composite separator to an ultraviolet light radiation for inducing a cross-linking reaction, to obtain an ultraviolet cross-linked composite separator;
wherein a melting point of the ultra-high heat-resistant polymer resin binder is 200°C or more, and based on a total mass of the ultra-high heat-resistant polymer resin binder, the auxiliary binder, and the inorganic filler, an addition amount of the ultra-high heat-resistant polymer resin binder is 10-60wt%, an addition amount of the auxiliary binder is 8-20wt%, and an addition amount of the inorganic filler is 1-70wt%.

12. The preparation method according to claim 11, wherein a wavelength of ultraviolet light used is in a range of 210nm-420nm, an ultraviolet cross-linking time is 0.001s-10s, a radiation light intensity is above 50mj/cm², and a ratio of the first solvent is 20-30wt% based on a total mass of the first solvent and the non-solvent.

13. A battery, comprising a separator, a positive electrode, a negative electrode and an electrolyte, **characterized in that** the separator is the separator according to any one of claims 7-10.

## Patentansprüche

1. Beschichtungssuspension, wobei die Hauptkomponenten der Beschichtungssuspension ein Lösungsmittel, ein ultrahoch-hitzebeständiges Polymerharzbindemittel, ein Hilfsbindemittel, ein ultraviolettaktiviertes Vernetzungsmittel und einen anorganischen Füllstoff umfassen, wobei
ein Schmelzpunkt des ultrahoch-hitzebeständigen Polymerharzbindemittels 200 °C oder mehr beträgt, **dadurch gekennzeichnet, dass**,
auf eine Gesamtmasse des ultrahoch-hitzebeständigen Polymerharzbindemittels, des Hilfsbindemittels und des anorganischen Füllstoffs bezogen, eine Zugabemenge des ultrahoch-hitzebeständigen Polymerharzbindemittels 10-60 Gew.-% beträgt und das ultrahoch-hitzebeständige Polymerharzbindemittel unter einem oder zwei von Polyimid, Etheranhydridpolyimid, Fluoranhydridpolyimid, Ketonanhydridpolyimid, Bismaleimidoligomer und alkenylterminiertem Polyimidoligomer ausgewählt wird und,
auf eine Gesamtmasse des ultrahoch-hitzebeständigen Polymerharzbindemittels, des Hilfsbindemittels und des anorganischen Füllstoffs bezogen, eine Zugabemenge des Hilfsbindemittels 8-20 Gew.-% beträgt und das Hilfsbindemittel unter einem oder mehreren von Acrylatpolymer, Polyacrylsäure, Polyurethanacrylat, Polysiloxanmethacrylat, Polyvinylidenfluoridhomopolymer, Vinylidenfluoridhexafluorpropylen-Copolymer und Polyvinylidenfluoridtetrafluorethylenpropylen-Terpolymer ausgewählt wird.

2. Beschichtungssuspension nach Anspruch 1, wobei eine Zugabemenge des ultraviolettaktivierten Vernetzungsmittels 0,001-6 Gew.-% beträgt und das ultraviolettaktivierte Vernetzungsmittel unter einem oder mehreren von Diethylentriamin, Ethylendiamin, 3,3'-Dichlor-4,4'-diammindiphenylmethan, m-Phenylendiamin, Diamindiphenylmethan, Isopropylthioxanthon, Benzophenon und Ethyl-p-dimethylaminobenzoat ausgewählt wird.

3. Beschichtungssuspension nach Anspruch 1, wobei eine Zugabemenge des anorganischen Füllstoffs 1-70 Gew.-% beträgt und ein Partikeldurchmesser des anorganischen Füllstoffs 0,3-0,8 µm beträgt.

4. Beschichtungssuspension nach Anspruch 3, wobei der anorganische Füllstoff unter einem oder mehreren von Al₂O₃, SiO₂, TiO₂, ZrO₂, MgO, CaO, AlOOH und SiC ausgewählt wird.

5. Beschichtungssuspension nach Anspruch 1, wobei die Beschichtungssuspension eine Beschichtungssuspension auf Basis organischer Lösungsmittel ist und deren Feststoffgehalt 7-20 Gew.-% beträgt.

6. Beschichtungssuspension nach Anspruch 1, wobei das Lösungsmittel N-Methylpyrrolidon ist.

7. Separator, **gekennzeichnet durch** Umfassen der Beschichtungssuspension nach einem der Ansprüche 1 bis 6 und eines Substrats, wobei die Beschichtungssuspension auf mindestens eine Oberfläche des Substrats aufgetragen und mit ultravioletter Lichtstrahlung einer festgelegten Energie und einer festgelegten Wellenlänge bestrahlt wird, um einen durch ultraviolette Strahlung vernetzten Separator zu erhalten.

8. Separator nach Anspruch 7, wobei eine Dicke des Substrats 5-20 µm beträgt und das Substrat irgendeines von mikroporösem Polyolefinseparator, mikroporösem Polyimidseparator, nichtgewobenem Separator, Mehrschichtverbundstoffseparator, keramikbeschichtetem Separator, polymerbeschichtetem Separator ist.

9. Separator nach Anspruch 7, wobei der Separator eine Bruchtemperatur von mehr als 180 °C und eine Durchschlagspannung von mehr als 2,1 kV aufweist und die Durchschlagsspannung pro Einheitsdicke mehr als 5,1 kV/mil beträgt.

10. Separator nach Anspruch 9, wobei die Bruchtemperatur des Separators mehr als 210 °C in einer Maschinenrichtung beträgt und die Bruchtemperatur des Separators mehr als 190 °C in einer Querrichtung beträgt.

11. Herstellungsverfahren für den Separator nach einem der Ansprüche 7 bis 10, **gekennzeichnet durch** Umfassen der folgenden Schritte:
Herstellen einer Suspension (S1): Zugabe von ultrahochhitzebeständigem Polymerharzbindemittel und Hilfsbindemittel in ein Lösungsmittel, nach vollständiger Auflösung Zugeben von anorganischem Füllstoff und gleichmäßige Dispergierung, um eine vorgemischte Suspension zu erhalten, Zugabe eines ultraviolettaktivierten Vernetzungsmittels in ein Lösungsmittel und dessen vollständige Auflösung, um eine ultraviolettaktivierte Vernetzungsmittellösung zu erhalten; und Zugabe der ultraviolettaktivierten Vernetzungsmittellösung in die vorgemischte Suspension in einer derartigen Menge, dass 0,001-6 Gew.-% des ultraviolettaktivierten Vernetzungsmittels vernetzt werden, um eine Suspension zu erhalten;
Beschichtung (S2): Beschichten der oben hergestellten Suspension auf mindestens eine Oberfläche eines Substrats;
Phasenumwandlung (S3): Eintauchen des nach dem Beschichten erhaltenen Separators in einen Koagulationsbehälter, der eine gemischte Lösung aus einem ersten Lösungsmittel und einem Nichtlösungsmittel enthält, um eine Phasenumwandlung auszuführen;
Trocknen (S4): Waschen und Trocknen eines im obigen Schritt (S3) erhaltenen Produkts, um einen Verbundstoffseparator zu erhalten;
Ultraviolettvernetzung (S5): Aussetzen des Verbundstoffseparators einer Ultraviolettlichtstrahlung zum Auslösen einer Vernetzungsreaktion, um einen ultraviolettvernetzten Verbundstoffseparator zu erhalten,
wobei ein Schmelzpunkt des ultrahoch-hitzebeständigen Polymerharzbindemittels 200 °C oder mehr beträgt und, auf eine Gesamtmasse des ultrahoch-hitzebeständigen Polymerharzbindemittels, des Hilfsbindemittels und des anorganischen Füllstoffs bezogen, eine Zugabemenge des ultrahoch-hitzebeständigen Polymerharzbindemittels 10-60 Gew.-%, eine Zugabemenge des Hilfsbindemittels 8-20 Gew.-% und eine Zugabemenge des anorganischen Füllstoffs 1-70 Gew.-% beträgt.

12. Herstellungsverfahren nach Anspruch 11, wobei eine Wellenlänge von verwendetem Ultraviolettlicht in einem Bereich von 210 nm-420 nm liegt, eine Ultraviolettvernetzungszeit 0,001 s-10 s beträgt, eine Strahlungslichtintensität über 50 mJ/cm² beträgt und ein Verhältnis des ersten Lösungsmittels 20-30 Gew.-%, auf eine Gesamtmasse des ersten Lösungsmittels und des Nichtlösungsmittels bezogen, beträgt.

13. Batterie umfassend einen Separator, eine positive Elektrode, eine negative Elektrode und einen Elektrolyten, **dadurch gekennzeichnet, dass** der Separator der Separator nach einem der Ansprüche 7 bis 10 ist.

## Revendications

1. Suspension de revêtement, dans laquelle les principaux composants de la suspension de revêtement comprennent un solvant, un liant de résine polymère à ultra-haute résistance thermique, un liant auxiliaire, un agent de réticulation activé par ultraviolets et une charge inorganique, dans laquelle
un point de fusion du liant de résine polymère à ultra-haute résistance thermique est supérieur ou égal à 200 °C, **caractérisée en ce que**
sur la base d'une masse totale du liant de résine polymère à ultra-haute résistance thermique, de l'agent auxiliaire et de la charge inorganique, une quantité d'ajout du liant de résine polymère à ultra-haute résistance thermique est de 10 à 60 % en poids, et le liant de résine polymère à ultra-haute résistance thermique est choisi parmi un ou deux parmi un polyimide, polyimide d'anhydride d'éther, un polyimide d'anhydride fluoré, un polyimide d'anhydride cétonique, un oligomère de bismaléimide et un oligomère de polyimide à terminaison alcényle ; et
sur la base d'une masse totale du liant de résine polymère à ultra-haute résistance thermique, de l'agent auxiliaire et de la charge inorganique, une quantité d'ajout du liant auxiliaire est de 8 à 20 % en poids, et le liant auxiliaire est choisi parmi un ou plusieurs parmi un polymère acrylate, un acide polyacrylique, un acrylate de polyuréthane, un méthacrylate de polysiloxane, un homopolymère de polyfluorure de vinylidène, un copolymère de fluorure de vinylidène-hexafluoropropylène et un terpolymère de fluorure de polyvinylidène-tétrafluoroéthylène-propylène.

2. Suspension de revêtement selon la revendication 1, dans laquelle une quantité d'ajout de l'agent de réticulation activé par ultraviolets est de 0,001 à 6 % en poids, et l'agent de réticulation activé par ultraviolets est choisi parmi la diéthylènetriamine, l'éthylènediamine, le 3,3'-dichloro-4,4'-diaminodiphénylméthane, la m-phénylènediamine, le diaminodiphénylméthane, l'isopropylthioxanthone, la benzophénone et le p-diméthylaminobenzoate d'éthyle.

3. Suspension de revêtement selon la revendication 1, dans laquelle la quantité d'ajout de la charge inorganique est de 1 à 70 % en poids, et un diamètre de particule de la charge inorganique est de 0,3 à 0,8 µm.

4. Suspension de revêtement selon la revendication 3, dans laquelle la charge inorganique est choisie parmi un ou plusieurs parmi Al₂O₃, SiO₂, TiO₂, ZrO₂, MgO, CaO, AlOOH et SiC.

5. Suspension de revêtement selon la revendication 1, dans laquelle la suspension de revêtement est une suspension de revêtement à base de solvant organique, et une teneur en matières solides de celle-ci est de 7 à 20 % en poids.

6. Suspension de revêtement selon la revendication 1, dans laquelle le solvant est la N-méthylpyrrolidone.

7. Séparateur, **caractérisé en ce qu'**il comprend la suspension de revêtement selon l'une quelconque des revendications 1 à 6 et un substrat, dans lequel la suspension de revêtement est revêtue sur au moins une surface du substrat et soumise à un rayonnement par lumière ultraviolette ayant une énergie définie et une longueur d'onde définie, afin d'obtenir un séparateur réticulé par ultraviolets.

8. Séparateur selon la revendication 7, dans lequel l'épaisseur du substrat est de 5 à 20 µm et le substrat est l'un quelconque parmi un séparateur microporeux polyoléfinique, un séparateur microporeux de polyimide, un séparateur non tissé, un séparateur composite multicouche, un séparateur à revêtement céramique, un séparateur à revêtement polymère.

9. Séparateur selon la revendication 7, dans lequel le séparateur a une température de rupture supérieure à 180 °C et une tension de claquage supérieure à 2,1 kV et la tension de claquage par unité d'épaisseur est supérieure à 5,1 kV/mil.

10. Séparateur selon la revendication 9, dans lequel la température de rupture du séparateur est supérieure à 210 °C dans la direction machine, et la température de claquage du séparateur est supérieure à 190 °C dans la direction transversale.

11. Procédé de préparation du séparateur selon l'une quelconque des revendications 7 à 10, **caractérisé en ce qu'**il comprend les étapes suivantes :
préparation d'une suspension (S1) : ajout d'un liant de résine polymère à ultra-haute résistance thermique et d'un liant auxiliaire dans un solvant ; après dissolution complète, ajout d'une charge inorganique et dispersion homogène pour obtenir une suspension prémélangée ; ajout d'un agent de réticulation activé par ultraviolets dans un solvant et dissolution complète pour obtenir une solution d'agent de réticulation activé par ultraviolets ; et ajout de la solution d'agent de réticulation activé par ultraviolets à la suspension prémélangée en une quantité telle que de 0,001 à 6 % en poids de l'agent de réticulation activé par ultraviolets est réticulé, afin d'obtenir une suspension ;
revêtement (S2) : revêtement de la suspension préparée ci-dessus sur au moins une surface d'un substrat ;
transformation de phase (S3) : immersion du séparateur obtenu après revêtement dans une cuve de coagulation contenant une solution mélangée d'un premier solvant et d'un non-solvant afin d'effectuer une transformation de phase ;
séchage (S4) : lavage et séchage d'un produit obtenu à l'étape (S3) ci-dessus, afin d'obtenir un séparateur composite ;
réticulation par ultraviolets (S5) : soumission du séparateur composite à un rayonnement de lumière ultraviolette pour induire une réaction de réticulation, afin d'obtenir un séparateur composite réticulé par ultraviolets ;
dans lequel un point de fusion du liant de résine polymère à ultra-haute résistance thermique est supérieur ou égal à 200 °C, et sur la base de la masse totale du liant de résine polymère à ultra-haute résistance thermique, de l'agent auxiliaire et de la charge inorganique, une quantité d'ajout du liant de résine polymère à ultra-haute résistance thermique est de 10 à 60 % en poids, une quantité d'ajout du liant auxiliaire est de 8 à 20 % en poids, et quantité d'ajout de la charge inorganique est de 1 à 70 % en poids.

12. Procédé de préparation selon la revendication 11, dans lequel une longueur d'onde de la lumière ultraviolette utilisée est comprise dans la plage de 210 nm à 420 nm, une durée de réticulation par ultraviolets est de 0,001 s à 10 s, une intensité lumineuse du rayonnement est supérieure à 50 mJ/cm², et un rapport du premier solvant est de 20 à 30 % en poids sur la base d'une masse totale du premier solvant et du non-solvant.

13. Batterie comprenant un séparateur, une électrode positive, une électrode négative et un électrolyte, **caractérisée en ce que** le séparateur est le séparateur selon l'une quelconque des revendications 7 à 10.
